# EUROPEAN PATENT SPECIFICATION

(11) **EP 2 719 489 B1**
(45) Date of publication and mention of the grant of the patent: **14.12.2016**
(21) Application number: 12188119.7
(22) Date of filing: 11.10.2012
(51) Int. Cl.: B23D 77/00, B23B 31/107, B23B 31/26

(54) **Toolholder with moving ball clamping arrangement and cutting tool having a toolholder and a replaceable cutting head**
Werkzeughalter mit beweglicher Kugelklemmanordnung und Schneidwerkzeug mit dem Werkzeughalter und auswechselbarem Schneidkopf
Porte-outil avec dispositif de serrage à bille mobile et outil de coupe comprenant un porte-outil et une tête de coupe remplaçable

(43) Date of publication of application: 16.04.2014
(73) Proprietor: Seco Tools AB, 737 82 Fagersta (SE)
(72) Inventor: Rimet, Lilian, 38 160 Saint Sauveur (FR)
(74) Representative: Klöfver, Jörgen

(56) References cited:
- WO-A1-03/090959
- WO-A1-2009/156829
- CH-A- 371 939
- CH-A- 437 965
- DE-U1- 29 711 064
- US-A1- 2002 005 228

## Description

### BACKGROUND AND SUMMARY

The present invention relates to a toolholder for a cutting tool and, more particularly, to a toolholder with a replaceable cutting head.

It is often useful to provide replaceable cutting heads on toolholders to permit replacing small, relatively quickly worn parts of a cutting tool without also requiring replacement of larger shank structures. One solution for attaching a replaceable cutting,head to a toolholder is provided by the PRECIMASTER head reamer tool available from Seco Tools AB, Fagersta, Sweden. The attachment arrangement provided by the PRECIMASTER tool provides a number of strengths, such as run out precision, ease of use, and permitting sending coolant or flushing liquid through the tool. However, transmission of torque between the shank and the cutting head is done via a pin that extends through the shank and the cutting head. It is also difficult to form the entire cutting head in a monobloc construction because of complex shapes used for connection of the cutting head to the shank. CH437965A, on which the preamble of claim 1 is based, shows a cutting head formed of multiple parts and that suffers from further disadvantages in that it can be challenging to properly mount the cutting head, and movement of the clamped portion of the cutting head into the toolholder appears to be limited only by contact between the cutting head and the top of the toolholder. These drawbacks have made it necessary to braze cutting inserts onto a steel body, which has made it impossible to provide larger numbers of teeth or cutting edges on smaller diameter cutting heads. For example, it is not possible to have six teeth on cutting heads with 10 mm or 12 mm diameters.

It is desirable to provide a toolholder for a cutting tool usable with a cutting head that can be made in a monobloc construction in very small diameters while permitting provision of large numbers of teeth. It is also desirable to provide a cutting head, toolholder, and cutting tool that provide a simple torque transmission arrangement. It is further desirable to provide a toolholder with a convenient arrangement for retaining a replaceable cutting head.

A tool holder according invention is defined in claim 1.

### BRIEF DESCRIPTION OF THE DRAWINGS

The features and advantages of the present invention are well understood by reading the following detailed description in conjunction with the drawings in which like numerals indicate similar elements and in which:
FIGS. 1A, 1B, and 1C are top perspective, bottom perspective, and side views, respectively, of a cutting head according to an aspect of the present invention;
FIGS. 2A, 2B, 2C, and 2D are perspective exploded, perspective, partial perspective, and cross-sectional views of a cutting tool according to an aspect of the present invention; and
FIG. 3 is a perspective view of a toolholder according to an aspect of the present invention;
FIGS. 4A and 4B are cross-sectional views of a cutting tool according to an aspect of the present invention, and FIG. 4C is a perspective view of a clamping member used in the cutting tool of FIGS. 4A and 4B;
FIGS. 5A and 5B are cross-sectional views of a cutting tool according to another aspect of the present invention, and FIG. 5C is a perspective view of a clamping member used in the cutting tool of FIGS. 5A and 5B;
FIGS. 6A and 6B are cross-sectional views of a cutting tool according to another aspect of the present invention, and FIG. 6C is a perspective view of a clamping member used in the cutting tool of FIGS. 6A and 6B;
FIGS. 6D and 6E are cross-sectional and perspective views, respectively, of a cutting tool and wrench according to another aspect of the present invention; and
FIGS. 6F and 6G are cross-sectional views of cutting tools with coolant flow arrangements according to aspect of the present invention.

### DETAILED DESCRIPTION

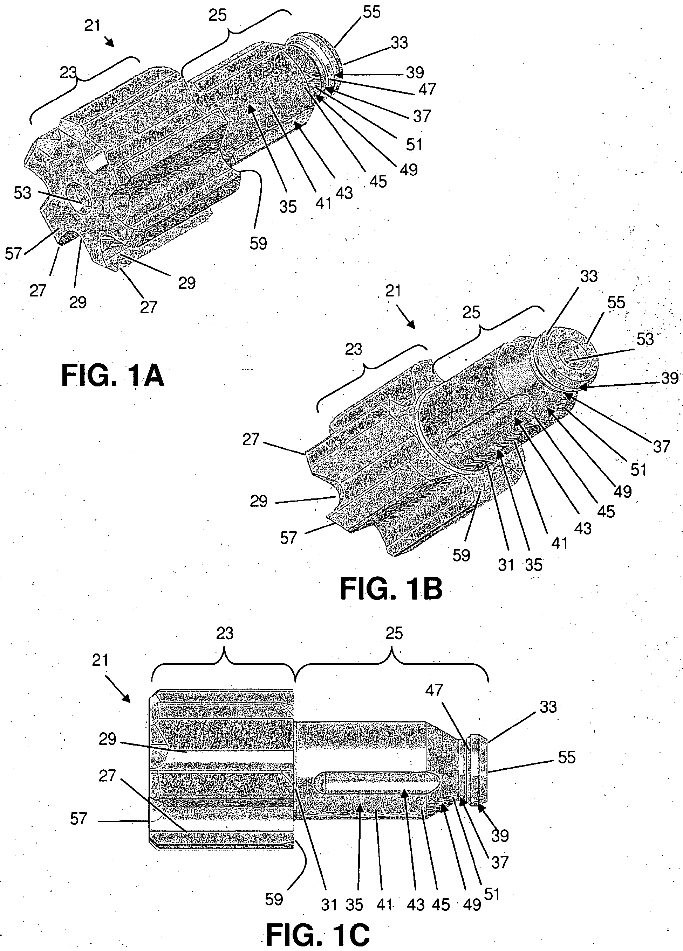

A cutting head 21 for a cutting tool is seen in FIGS. 1A-1C. The cutting head 21 can be used with a plurality of different types of toolholders to form the cutting tool. The cutting head 21 comprises a cutting portion 23 and a shank portion 25. The cutting portion 23 comprises a plurality of integrally formed cutting edges 27. The cutting edges 27 at least partially define a corresponding plurality of flutes 29. The cutting edges 27 and flutes 29 can be helical or, as seen in FIGS. 1A-1C, straight, i.e., generally parallel to the longitudinal axis of the cutting head 21.

The shank portion 25 has a first end 31 adjacent the cutting portion 23 and a second end 33. The shank portion 25 ordinarily has a smaller maximum width or diameter than a widest portion of the cutting portion The shank portion 25 has a first portion 35 having a first diameter, a second portion 37 having a second diameter smaller than the first diameter, and a third portion 39 having a third diameter larger than the second diameter. The first portion 35, the second portion 37, and the third portion 39 are ordinarily all cylindrical, i.e., have exterior surfaces that extend parallel to the longitudinal axis of the cutting head 21, and, more particularly, are ordinarily all circularly cylindrical, i.e., circular in cross-section. The third diameter is usually the same as or smaller than the first diameter. The first portion 35 of the shank portion 25 is closer to the first end 31 of the shank portion than the second and third portions 37 and 39 of the shank portion and the third portion of the shank portion is disposed closer to the second end 33 of the shank portion than the first and second portions.

The first portion 35 has an exterior surface 41 comprising at least one axially extending recess 43 extending from an end 45 of the first portion closest to the second portion 37 toward the first end 31 of the shank portion. Ordinarily, a plurality of axially extending recesses 43 are equally spaced around the first portion 35, such as three recesses spaced every 120° around the longitudinal axis of the cutting head 21. A surface of each recess 43 has a radius that is less than a radius of the exterior surface 41 of the first portion 35 of the shank portion 25.

While the first portion 35 of the shank portion 25 might be adjacent to the second portion 37 of the shank portion, and second portion of the shank portion might be adjacent to the third portion 39 of the shank portion, ordinarily a transition region 47 is provided between the third portion of the shank portion and the second portion of the shank portion and a transition region 49 is provided between the first portion of the shank portion and the second portion of the shank portion. The transition regions 47 and 49 are ordinarily frustoconical. The one or more axially extending recesses 43 end on a surface 51 of the frustoconical transition region 49 between the first portion 35 of the shank portion 25 and the second portion 37 of the shank portion.

A passages 53 can be provided through the cutting head 21 extending from an end 55 of the cutting head by the shank portion 25 toward an opposite end 57 of the cutting head by the cutting portion 23. The passage 53 can be used for delivering fluid to the cutting head 21 during a cutting operation to facilitate cooling and/or flushing of debris. Ordinarily, the passage 53 extends from the end 55 of the cutting head 21 to the opposite end 57 of the cutting head along a central axis of the cutting portion. The passage 53 may, however, be offset from the central axis of the cutting head 21, multiple passages may be provided, and parts or all of the passages may extend at angles to the longitudinal axis of the cutting tool, such as for delivering fluid to points below the end 57 of the cutting head 21.

The cutting head 21 structure as described facilitates integrally forming the cutting head of a uniform material, i.e., as a so-called "monobloc", such as entirely forming the cutting head of a pressed and sintered cemented carbide material. The shapes of the parts of the cutting head 21 need not be complex and can be easily pressed without the need to braze cutting inserts onto a steel body. The simple shape facilitates providing a relatively large number of cutting edges 27 on relatively small diameter cutting portions 23. For example, on cutting heads 21 with cutting portions 23 having 10 mm or 12 mm diameters, or diameters no greater than 15 mm, up to 6 cutting edges 27 have been formed and, on cutting heads with cutting portions no greater than 16 mm, eight cutting edges having been provided.

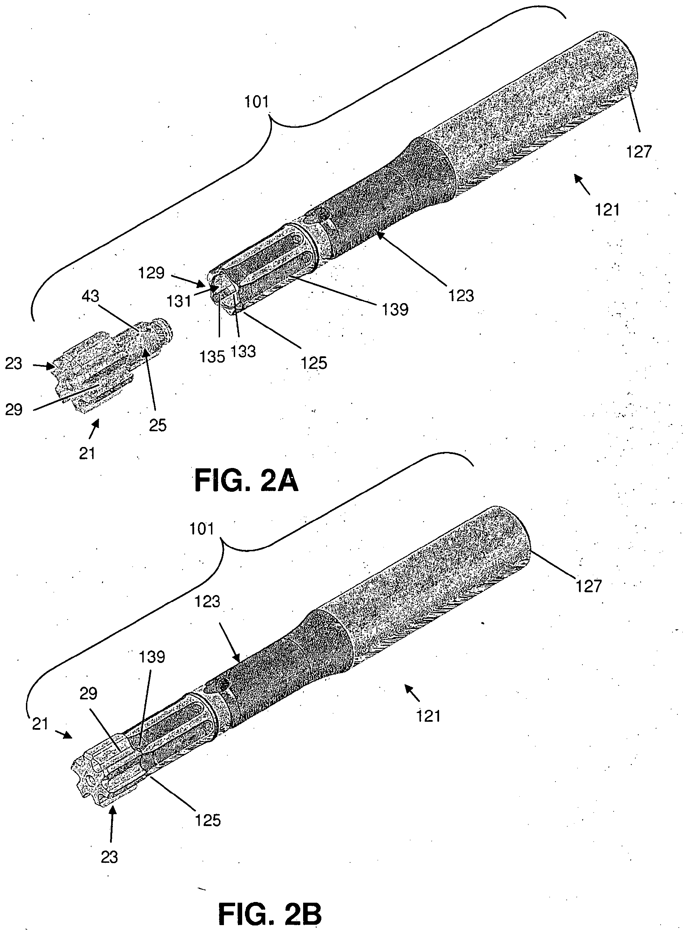

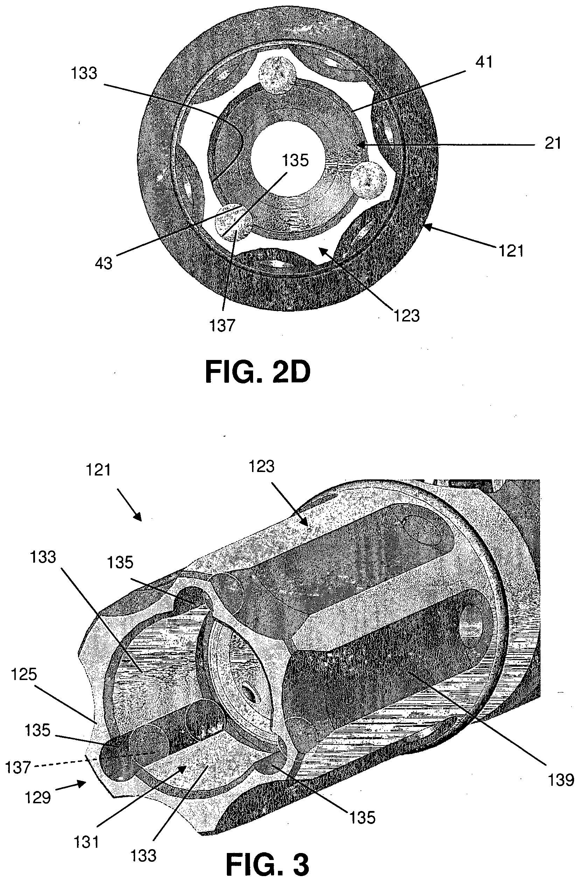

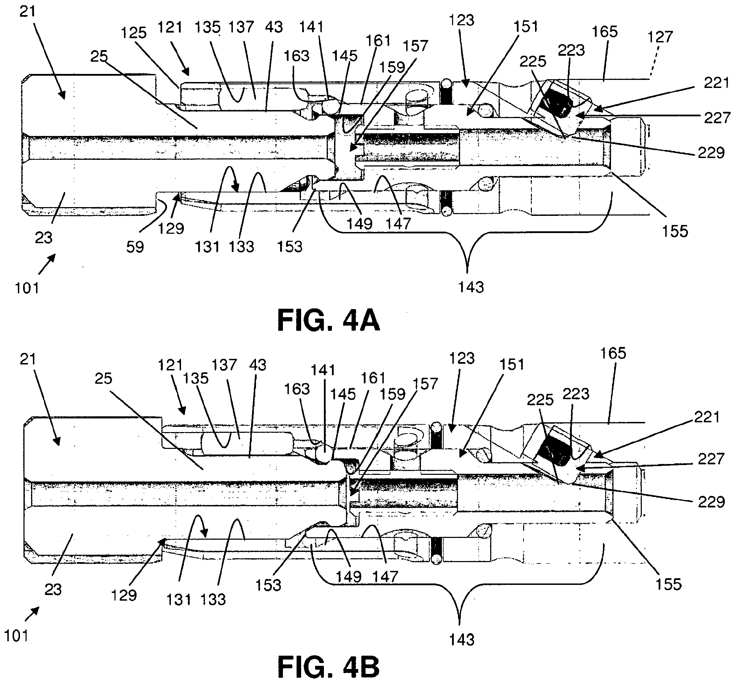

As seen in FIGS. 2A-2D, the cutting head 21 can be used in a cutting tool 101 comprising a toolholder 121. The toolholder 121 comprises a body 123 comprising a first end 125 and a second end 127 (dotted line in FIG. 4A represents that body extends beyond view to second end), and an axial opening 129 (FIGS. 2A and 3) extending from the first end toward the second end. The axial opening 129 comprises a first portion 131 having a first diameter at least as large as the first diameter of the first portion 35 of the shank portion 25 so that the shank portion is adapted to extend into the axial opening, usually up to a point where the bottom 59 of the cutting portion 23 of the cutting head 21 abuts or is close to the first end 125 of the body 123 of the toolholder.

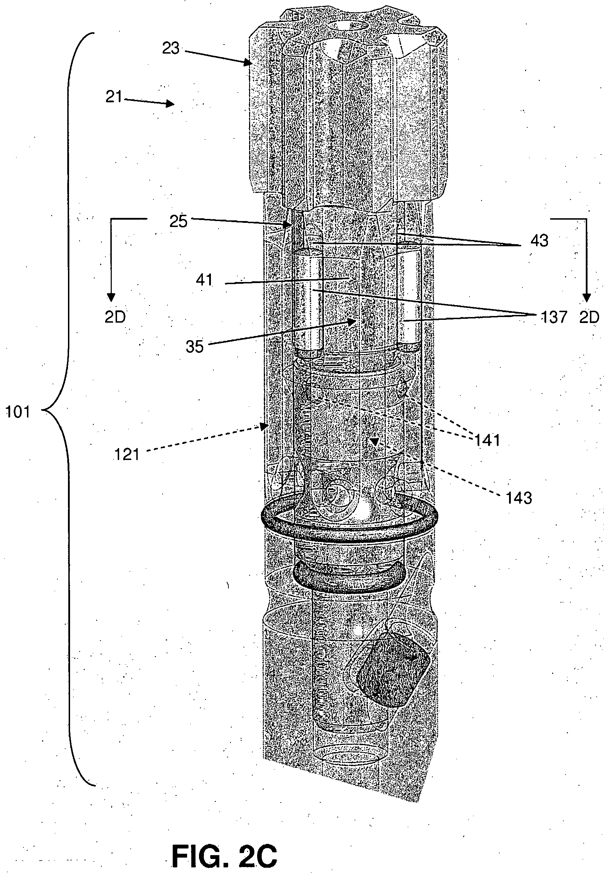

The first portion 131 of the axial opening 129 has an interior surface 133 comprising at least one axially extending recess 135, usually the same number of recesses as are provided on the exterior surface 41 of the first portion 35 of the shank portion 25. As seen in FIG. 2C (showing the toolholder 121 in phantom) and FIG. 2D, at least one ball or, or more typically, an axially extending pin 137 is disposed in each axially extending recess 43 of the exterior surface 41 of the first portion 35 of the shank portion 25 and in a corresponding axially extending recess 135 of the interior surface 133 of the first portion 131 of the axial opening 129 so that the cutting head 21 is non-rotatable relative to the toolholder 121. In this way, torque transmission between the toolholder 121 and the cutting head 21 is accomplished without the need for radially extending pins extending through both the toolholder and the cutting head.

The body 123 ordinarily comprises a plurality of flutes 139. As seen, for example, in FIG. 2B, the plurality of flutes 29 on the cutting head 21 align with the plurality of flutes 139 on the body 123 when the ball(s) or axially extending pin(s) are disposed in the axially extending recess(es) 43 of the exterior surface 41 of the first portion 35 of the shank portion 25 and the axially extending recess(es) 135 of the interior surface 133 of the first portion 131 of the axial opening 129.

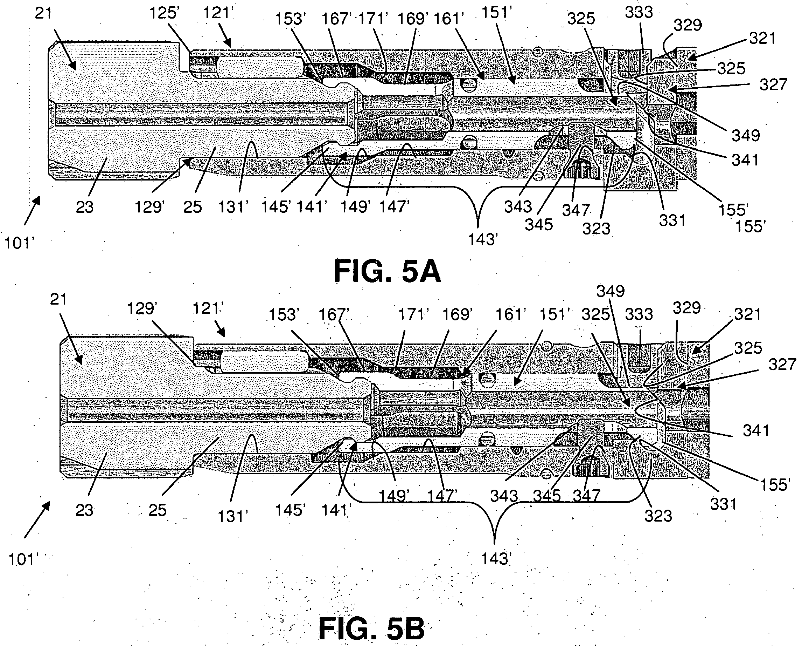

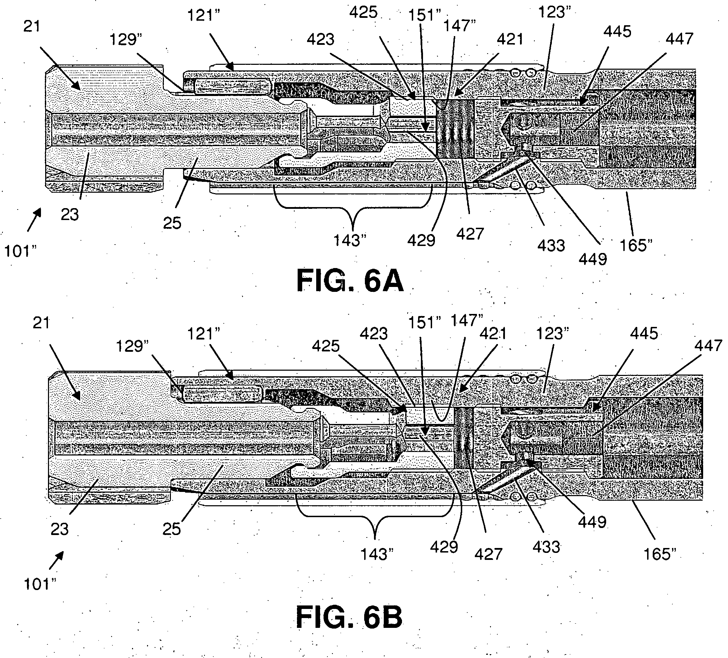

By providing the shank portion 25 with a third portion 39 that has a larger diameter than the second portion 37, the third portion 39 forms a recess and a lip that can be gripped to retain the shank portion of the cutting head 21 in the axial opening 129 of the toolholder 121, i.e., prevent the shank 25 from moving axially out of the axial opening. FIGS. 2C and 4A-4C show an embodiment of a gripping or clamping structure 143 in the form of a plurality of balls 141 that extend through holes in a clamping member or "rod" 151 and into the recess defined by the third portion 39 and the second portion 37 of the shank portion 25 of the cutting head 25. Consequently, the depth of the recess defined by the third portion 39 and the second portion 37 should be of sufficient size to receive a gripping structure of sufficient size to hold the shank portion 25 in the toolholder 121 and resist forces tending to pull the cutting head 21 away from the toolholder during operation. The clamping member 143 is movably disposed in the axial opening 129. A variety of different arrangements for gripping the shank portion 25 to retain the cutting head 21 relative to the toolholder 121 are possible. Other embodiments of toolholders with clamping arrangements in which, instead of balls, elastic fingers are used to grip the shank portion, are shown in FIGS. 5A-5C and 6A-6G.

As seen in FIGS. 4A and 4B, an embodiment of the structure for preventing the shank portion 25 of the cutting head 21 from being able to be moved axially out of the axial opening 129 comprises one or more balls 141 that extend through one or more radially extending holes 145 in the clamping member 143. The body 123 of the toolholder 121 comprises the first end 125 and the second end 127, and the axial opening 129 extending from the first end toward the second end. The axial opening 129 of the body 121 comprises, in addition to the first portion 131 having the first diameter, a second portion 147 having a second diameter, the first portion being closer to the first end 125 of the body than the second portion and the first diameter being larger than the second diameter.

A transition portion 149 is ordinarily provided between the first portion 131 and the second portion 147. The transition portion 149 is ordinarily frustoconical.

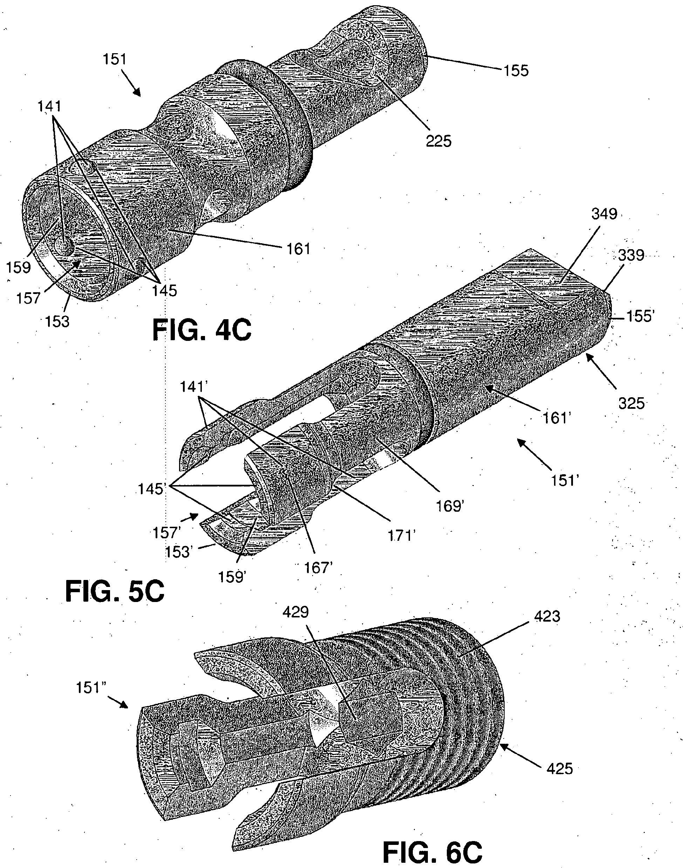

The clamping member 143 comprises a structure that shall be denominated as a "rod" 151 (shown separately from the toolholder in FIG. 4C) that comprises a first end 153 and a second end 155, and an axial opening 157 extending from the first end toward the second end. The axial opening 157 of the rod 151 comprises an interior surface 159, the at least one and, usually, a plurality of radially extending holes 145 extending radially outward from the interior surface of the axial opening of the rod to an exterior surface 161 of the rod. A plurality of surface of the axial opening of the rod to an exterior surface 161 of the rod. A plurality of radially extending holes 145 are ordinarily equally spaced around a circumference of the rod 151. The plurality of holes 145 ordinarily includes at least three radially extending holes.

A ball 141 that ordinarily has the same diameter as the hole 145 is disposed in each hole. Instead of a spherical ball, a pin might be provided in the hole 145 instead, and it shall be understood that references to the ball 141 encompass similar structures such as a pin. A structure such as a pin would preferably, but not necessarily, have rounded edges to facilitate sliding against surfaces of the cutting head and the toolholder.

The hole 145 and the ball 141 are sized so that, when the ball contacts at least part of an interior surface 163 of the transition portion 149 of the axial opening 129 of the body 123 of the toolholder 121, part of the ball extends through the at least one hole into the axial opening 157 of the rod.

As seen in FIG. 4A, when the rod 151 is disposed in an axial position relative to the axial opening 129 of the body 123 close enough to the first end 125 of the body so that the holes 145 are disposed opposite the first portion 131 of the axial opening or at least a part of the transition region 149 of the axial opening closest to the first portion of the axial opening, the balls 141 are movable in the radially extending holes so that they do not extend into the axial opening 157 of the rod 151 past the interior surface 159 of the axial opening. When the rod 151 is disposed in a position in which the balls 141 can be moved radially out of the axial opening 157, the shank portion 25 of the cutting head 21 can be inserted into the axial opening of the rod so that the second portion 37 and the third portion 39 of the shank portion can be moved from a position in which they are disposed axially above the holes to a position, shown in FIG. 4B, in which they are disposed opposite and axially below the holes, respectively.

When the rod 151 is moved axially further into the axial opening 129, i.e., in a direction away from the first end 125 of the body 123 of the toolholder 121, the holes 145 are moved to a position opposite a portion of the transition portion 149 or the second portion 147 of the axial opening such that portions of the balls 141 in the holes must extend into the axial opening 157 of the rod. When the shank 25 of the cutting head 21 is inserted into the axial opening 157 of the rod 151 so that the second portion 37 and the third portion 39 of the shank are disposed axially opposite and axially below the holes 145, respectively, the portions of the balls 141 that extend into the axial opening of the rod prevent the shank from being removed from the axial opening of the rod. The second portion 37 and the third portion 39 of the shank 25 define a recess into which the portions of the balls 141 extend, and the lip formed by the third portion keeps the shank 25 from being withdrawn from the axial opening 157 of the rod 151. Thus, the rod 151 is axially movable in the axial opening 129 of the body 123 of the toolholder 121 between an "unclamping position" as shown in FIG.4A and a "clamping position" as shown in FIG. 4B. The transition portion 149 can be omitted, i.e., the diameter of the axial opening 129 can abruptly change from the first diameter of the first portion 131 to the second diameter of the second portion 147 of the axial opening, however, it ordinarily tends to facilitate movement of the rod 151 in the axial opening 129.

A variety of arrangements can be provided to draw the rod 151 into the axial opening 129 of the body 123 of the toolholder 121 in order to clamp the shank 25 of the cutting head 21 in the axial opening 157 of the rod. FIGS. 4A and 4B show a first arrangement 221 in which the body 123 of the toolholder 121 comprises an internally threaded opening 223 extending from an exterior surface 165 of the body to the axial opening 129 of the body. The threaded opening 223 forms an angle greater than 0° and less than 90° with a central axis of the body 123.

The rod 151 in the axial opening 129 comprises a radially extending recess 225.

An externally threaded member 227, ordinarily a set screw, is provided in threaded connection with the internally threaded opening 223 so that an end 229 of the externally threaded member contacts a surface of the radially extending recess 225 in the rod. The externally threaded member 227 is movable, while the end 229 of the externally threaded member 227 is in contact with the surface of the radially extending recess 225, between a first, radially outermost position and a second, radially innermost position.

When the externally threaded member 227 is in a position such that it is not disposed in the radially extending recess 225 in the rod 151, the rod can be substantially freely axially movable in the axial opening 129 of the body 123 of the toolholder 121.

When the externally threaded member 227 is in the radially outermost position in contact with the recess 225 in the rod 151, as seen in FIG. 4A, the rod is disposed in the unclamping position such that the holes are opposite the first portion 131 of the axial opening or at least a part of the transition region 149 of the axial opening closest to the first portion of the axial opening, and the balls 141 are movable in the radially extending holes so that they do not extend into the axial opening 157 of the rod 151 past the interior surface 159 of the axial opening so that the second portion 37 and the third portion 39 of the shank portion can be moved from a position in which they are disposed axially above the holes to a position, shown in FIG. 4B, in which they are disposed opposite and axially below the holes, respectively. In the unclamping position shown in FIG. 4A, the shank 25 is still freely movable relative to the axial opening 157 of the rod 151.

As the externally threaded member 227 is moved toward the radially innermost position, i.e., toward the clamping position shown in FIG. 4B, the end 229 of the externally threaded member 227 in the recess 225 of the rod 151 urges the rod downward in the axial opening 129 of the body 123 of the toolholder 121 away from the first end 125 of the toolholder. Consequently, the holes 145 in the rod 151 are moved to a position opposite a portion of the transition portion 149 or the second portion 147 of the axial opening such that portions of the balls 141 in the holes must extend into the axial opening 157 of the rod. In this position, the shank 25 is still not freely movable relative to the axial opening 157 of the rod 151 because the balls 141 prevent movement of the third portion 39 of the shank past the balls. When the balls 141 are disposed in the recess defined by the second portion 37 and the third portion 39 of the shank 25, the shank cannot be removed axially from the axial opening 157 of the rod 151.

FIGS. 5A and 5B show another drawing arrangement 321 that can be used in connection with a cutting tool having a toolholder with the clamping member 143 having one or more balls 141. FIGS. 5A-5B, however, show a cutting tool 101' with the drawing arrangement 321 used with a toolholder 121' having another form of clamping member 143' having elastically movable fingers 141', tips 145' of which are adapted to extend into the recess defined by the second and third portions 37 and 39 of the shank 25 of the cutting head 21 to grip the shank and retain it in an axial opening 157' of a rod 151' of the clamping member 143'. The rod 151' is shown separately from the toolholder in FIG. 5C.

The principles of operation behind the clamping members 143 and 143' is similar in the sense that, in one "unclamping" position closer to the first end 125' of the body 123' of the toolholder 121', the clamping member permits the shank 25 to be moved axially in and out of the axial opening of the rod of the clamping member. The toolholders 121 and 121' can be substantially the same, except for the provision of different rods 151 and 151' and differences relating to different structures for the use of different drawing arrangements 221 and 321. When the rod 151' (or 151) is drawn, i.e., moved, to the "clamping" position further into the axial opening 129', i.e., away from the first end 125' of the body 123' of the toolholder 121', the tips 145' of the fingers 141' (or, in FIGS. 4A-4B, balls 141) are caused to enter the recess defined by the second and third portions 37 and 39 of the shank 25 and prevent the lip formed by the third portion of the shank from passing the balls or tips of the fingers so that the shank is retained relative to the axial opening 157' (or 157) of the rod 151' (or 151). It will be appreciated that the drawing arrangement 221 shown in FIGS. 4A and 4B, though shown in connection with the clamping arrangement 143 with balls 141, can be used with the clamping arrangement 143' having elastically movable fingers 141'.

As seen in FIG. 5C, the rod 151' comprises a first end 153', a second end 155', and an axial opening 157' defined by the fingers 141'. The axial opening 1.57' has an interior surface 159', however, tips 145' of the fingers 141' extend radially inwardly of the interior surface. The rod 151' also comprises an exterior surface 161' comprising a first portion 167' having a first diameter and a second portion 169' having a second diameter smaller than the first diameter. Ordinarily, but not necessarily, a frustoconical transition portion 171' extends between the first portion 167' and the second portion 169'. The first portion 167' and the transition portion 171' of the exterior surface 161' and, ordinarily, part of the second portion 169' are on the fingers 141', with the first portion closest to the first end 153'

When the rod 151' is in the position shown in FIG. 5A, where the first portion 167' of the exterior surface 161' is disposed above the second portion 147' and, if provided, part or all of the transition portion 149' of the axial opening 129', the elastic fingers 141' are able to be moved radially outwardly toward the interior surface 133' of the first portion 131'. In this position, when the cutting head 21 is inserted into or pulled from the axial opening 157, the fingers 141' will be urged outwardly as the third portion 39 of the shank portion 25 is pushed or pulled past the inwardly extending tips 145' of the fingers. The third portion 39 and/or the tips 145' of the fingers 141' can be provided with chamfers to facilitate pushing the third portion past the tips of the fingers.

When the rod 151' is drawn further into the axial opening 129' to a position as shown in FIG. 5B, where the first portion 167' of the exterior surface 161' is disposed opposite the second portion 147' or part of the transition portion 149' of the axial opening, the elastic fingers 141' cannot be moved radially outwardly a sufficient distance to permit the third portion 39 of the shank 25 of the cutting head to move past the inwardly extending tips 145' of the fingers 141'.

The drawing arrangement 321 shown in FIGS. 5A and 5B comprises a radially extending wedge surface 323 on a base portion 325 of the rod 151'. A clamping piston 327 is movably disposed in a radially extending hole 329 in the body 123' of the toolholder 121'. The clamping piston 327 comprises a wedge surface 331 adapted to contact the base portion wedge surface 325.

The clamping piston 327 is adapted to be disposed in a first position between the positions shown in FIG. 5A and 5B in which the base portion 325 wedge surface 323 and the clamping piston 327 wedge surface 329 are aligned so that the clamping member 143' is retained by the clamping piston and the clamping member is adapted to be disposed in the unclamping position. The clamping piston is also adapted to be disposed in a second position seen in FIG. 5B in which the base portion 325 wedge surface 323 and the clamping piston 327 wedge surface 331 are aligned so that the clamping member 143' is retained by the clamping piston and the clamping member is only adapted to be disposed in the clamping position. The clamping piston 327 is also adapted to be disposed in a third position seen in FIG. 5A in which the base portion 325 wedge surface 323 and the clamping piston 327 wedge surface 331 are not aligned at all and the clamping member is not retained by the clamping piston.

Ordinarily, when the clamping piston 327 is in the first position, the radially outermost. part of the wedge surface 323 of the base portion 325 is axially aligned with the radially innermost part of the wedge surface 331 of the clamping piston and the clamping member 143' (or 143) is in an unclamping position. As the clamping piston 327 is moved toward the position shown in FIG. 5B, the wedge surfaces 323 and 331 slide against each other and the rod 151' (or 151) is drawn deeper into the axial opening 129' of the body 123' of the toolholder 121' and the clamping member 143' (or 143) moves from the unclamping position to a clamping position.

The illustrated clamping piston 327 comprises a set screw 333 that is disposed in an internally threaded hole 335 in the body of the clamping piston. An axially extending hole 337 is provided in the clamping piston 327 and receives the base portion 325 of the rod 151' (or 151). The hole 335 extends to the axially extending hole 337. When the base portion 325 of the rod 151' (or 151) is disposed in the axially extending hole 337 and the set screw 333 is screwed into the internally threaded hole 335, the screw abuts against the base portion of the rod and the clamping piston 327 is moved toward the position shown in FIG. 5A. As seen in FIG. 5C, the base portion of the rod 151' can be provided with a flat abutment surface 349 against which the set screw 333 can abut. When the base portion 325 of the rod 151' (or 151) is disposed in the axially extending hole 337 and the set screw 333 is screwed out of the internally threaded hole 335, the set screw remains in contact with the base portion 325 of the rod and causes the piston 327 to be moved toward the position shown in FIG. 5B. As the piston 327 moves toward the position shown in FIG. 5B, the wedge surface 323 on the base portion 325 of the rod 151' (or 151) moves against the wedge surface 331 on the clamping piston and draws the rod into the axial opening so that the clamping member 143' (or 143) is in the clamping position. Other surfaces 339 (FIG. 5C) and 341 of the base portion 325 and the clamping piston 327 can be wedge surfaces which may facilitate movement of the clamping piston and the rod 151' (or 151).

An axially extending recess 343 can be provided in the base portion 325 of the rod 151' (or 151), and a stop 345 can extend into the axial opening 129' of the body 123' of the toolholder 121' into the axially extending recess so that movement of the clamping member 143' (or 143) is limited, such as to movement between the first and second positions, when the stop 345 is received in the recess 343. The stop 345 can be in the form of a set screw that is adapted to be screwed into and out of an internally threaded hole 347 in the body 123' of the toolholder 121'. The set screw stop 345 can be used to further fix the rod 151' (or 151) in position relative to the axial opening 129' of the body 123' of the toolholder 121'.

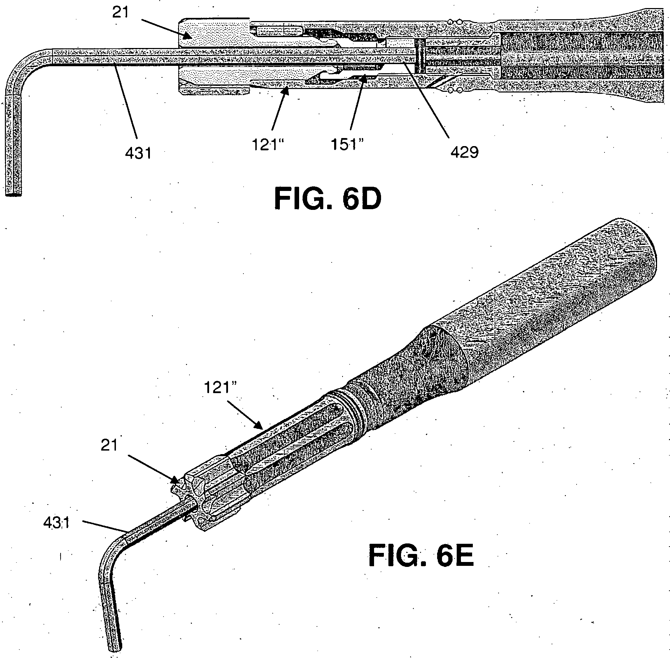

FIGS. 6A-6G show features of yet another drawing arrangement 421 that can be used in connection with the clamping member 143 having one or more balls 141 or a clamping member 143" having elastically movable fingers 141" like the clamping member 143' described in connection with FIGS. 5A-5C. In the toolholder 121." of the tool 101" shown in FIGS. 6A-6B and 6D-6G, the drawing arrangement 421 includes a base portion 425 of a rod 151" (shown separately from the toolholder in FIG. 6C) that has external threads 423 and is in threaded engagement with internal threads 427 on the second portion 147" of the axial opening 129" of the body 123" of the toolholder 121" and is axially movable relative to the second portion of the axial opening of the body. The base portion 425 is provided with a non-circular axially extending opening 429 for receiving a key wrench 431 seen in FIGS. 6D and 6E that is used to turn the rod 151" so that it is drawn into the axial opening 129" to the clamping position (FIG. 6B) or out from the opening to the unclamping position (FIG. 6A).

The rod 151" is shown with elastic fingers 141" that function to clamp the shank 25 of the cutting head 21 in much the same manner as the elastic fingers 141' of the rod 151'. As seen in FIG. 6C, the rod 151" differs from the rod 151' (FIG. 5C) primarily in that a different drawing arrangement 421 is provided on the rod 151" than the drawing arrangement 321 provided on the rod 151'.

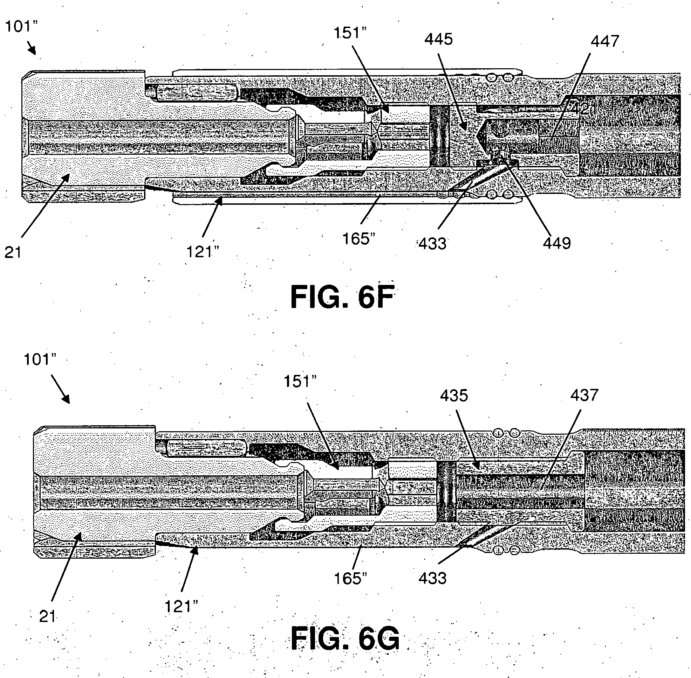

All of the disclosed embodiments can be configured to provide for coolant flow through axial openings extending axially through the cutting head 21 and the clamping arrangements 143, 143', or 143" in the toolholder. Other arrangements can be provided. The arrangement seen in FIG. 6F and 6G has radially extending holes 433 in the toolholder 121" extending from the axial opening 129" to the exterior surface 165" of the body 123". In FIG. 6G, a screw 435 or insert is provided in the axially extending opening 129" and has a central opening 437 so that fluid can flow axially through the screw. The screw 435, however, blocks the radially extending holes 433. In FIG. 6F, a screw 445 has a central opening 447 that does not extend through the entire length of the screw. At a closed end of the opening, radially extending holes 449 are provided that can be aligned with the radially extending holes 433 in the toolholder 121". In this way, fluid can be directed through the tool 101" in a different manner than through a central opening extending through the entire tool.

Thus, it will be appreciated that the same cutting head 21 can be used with any of the toolholders 121, 121', 121", each of which can be provided with the same structure for transmitting torque to the cutting head, i.e., through balls or pins 137 disposed in axially extending recesses in the shank 25 of the cutting head and in the first portion 131 of the axial opening 129 of the body 123 of the toolholder. Moreover, the shank 25 can be clamped in the axial opening 129 of the body 123 of the toolholder by clamping arrangements that use radially movable balls, as shown in FIG. 4A-4C, or that use elastic fingers, as shown in FIGS. 5A-6G. Further, the clamping arrangements that use radially movable balls can include drawing arrangements for drawing a rod of the clamping arrangement into the axial opening of the body of the toolholder involving an angled set screw drawing arrangement 221 as shown in FIGS. 4A-4B or can be easily adapted to include the piston drawing arrangement 321 as shown in FIGS. 5A-5B, or the threaded drawing arrangement as shown in FIGS. 6A-6B and 6D-6G.

To the extent that structure, material, or acts are presently considered to be essential, they are identified as such.

While this invention has been illustrated and described in accordance with a preferred embodiment, it is recognized that variations and changes may be made therein without departing from the invention as set forth in the claims.

## Claims

1. A toolholder (121) comprising a cutting head clamping arrangement, comprising:
a body (123) comprising a first end (125) and a second end (127), and an axial opening (129) extending from the first end (125) toward the second end (127), the axial opening (129) of the body (123) comprising a first portion (131) having a first diameter and a second portion (147) having a second diameter, the first portion (131) of the axial opening (129) of the body (123) being closer to the first end (125) than the second portion (147) of the axial opening (129) of the body (123) and the first diameter being larger than the second diameter; and
a rod (151) movably disposed in the axial opening (129) of the body (123) up to a bottom depth in the axial opening, the rod (151) comprising a first end (153) and a second end (155),
the rod comprising an axial opening (157) extending from the first end (153) of the rod (151) toward the second end (155) of the rod (151), the axial opening (157) of the rod (151) comprising an interior surface (159), at least one radially extending hole (145) extending radially outward from the interior surface (159) of the axial opening (157) of the rod (151) to an exterior surface of the rod (151),
a ball (141) is disposed in the at least one hole (145),
the axial opening (129) of the body (123) comprising a frustoconical, transition portion (149) between the first portion (131) of the axial opening (129) of the body (123) and the second portion (147) of the axial opening (129) of the body (123),
wherein the at least one hole (145) has a first axial length and the ball (141) has a diameter greater than the first axial length, and extends through the at least one hole (145) into the axial opening (157) of the rod (151) when the rod (151) is at the bottom depth in the axial opening (129), **characterised in that** the ball (141) contacts at least part of an interior surface (163) of the transition portion (149), when the vod (151) is at the bottom depth in the, axial opening (129).

2. The toolholder (121) as set forth in claim 1, **characterized in that** the at least one hole (145) and the ball (141) are sized so that, when the ball (141) contacts at least part of an interior surface of the second portion (147) of the axial opening (129) of the body (123), part of the ball (141) extends through the at least one hole (145) into the axial opening (157) of the rod (151).

3. The toolholder (121) as set forth in claim 1, **characterized in that** the rod (151) comprises a plurality of radially extending holes (145) and a corresponding plurality of balls (141) disposed in respective ones of the plurality of radially extending holes (145).

4. The toolholder (121) as set forth in claim 3, **characterized in that** the plurality of radially extending holes (145) are equally spaced around a circumference of the rod (151).

5. The toolholder (121) as set forth in claim 3, **characterized in that** the rod (151) comprises at least three radially extending holes (145).

6. The toolholder (121) as set forth in claim 1, **characterized in that** the rod (151) comprises a radially extending wedge surface (323) on the rod (151), and a clamping piston (327) movably disposed in a radially extending hole (329) in the body (123), the clamping piston (327) comprising a wedge surface (331) adapted to contact the rod (151) wedge surface (323), the clamping piston (327) being adapted to be disposed in (a) a first position in which the rod (151) wedge surface (323) and the clamping piston (327) wedge surface (331) are aligned so that the rod (151) is retained in the axial opening (129) of the body (123) by the clamping piston (327) and at least part of the at least one hole (145) is adapted to be disposed opposite the first portion (131) of the axial opening (129) of the body (123), and (b) a second position in which the rod (151) wedge surface (323) and the clamping piston (327) wedge surface (331) are aligned so that the rod (151) is retained in the axial opening (129) of the body (123) by the clamping piston (327) and at least part of the at least one hole (145) is disposed opposite the transition portion (149) of the axial opening (129) of the body (123).

7. The toolholder (121) as set forth in claim 1, **characterized in that** the rod (151) comprises a radially extending wedge surface (323) on the rod (151), and a clamping piston (327) movably disposed in a radially extending hole (329) in the body (123), the clamping piston (327) comprising a wedge surface (331) adapted to contact the rod (151) wedge surface (323), the clamping piston (327) being adapted to be disposed in (a) a first position in which the rod (151) wedge surface (323) and the clamping piston (327) wedge surface (331) are aligned so that the rod (151) is retained in the axial opening (129) of the body (123) by the clamping piston (327) and at least part of the at least one hole (145) is adapted to be disposed opposite the first portion (131) of the axial opening (129) of the body (123), and (b) a second position in which the rod (151) wedge surface (323) and the clamping piston (327) wedge surface (331) are aligned so that the rod (151) is retained in the axial opening (129) of the body (123) by the clamping piston (327) and at least part of the at least one hole (145) is disposed opposite the second portion (147) of the axial opening (129) of the body (123).

8. The toolholder (121) as set forth in claim 7, **characterized in that** the clamping piston (327) is adapted to be disposed in (c) a third position in which the rod (151) wedge surface (323) and the clamping piston (327) wedge surface (331) are not aligned and the rod (151) is not retained by the clamping piston (327).

9. The toolholder (121) as set forth in claim 7, **characterized in that** the rod (151) comprises an axially extending recess (343) in the rod (151), and a stop (345) extending into the axially extending recess (343) so that the rod (151) is only adapted to move between the first position and the second position.

10. The toolholder (121) as set forth in claim 1, **characterized in that** the body (123) comprises an internally threaded opening (223) extending from an exterior surface (165) of the body (123) to the axial opening (129) of the body (123) and forming an angle greater than 0° and less than 90° with a central axis of the body (123), the rod (151) comprises a radially extending recess (225), the toolholder (121) comprising an externally threaded member (227) in threaded connection with the internally threaded opening (223) so that an end (229) of the externally threaded member (227) contacts a surface of the radially extending recess (225) in the rod (151), the externally threaded member (227) being movable, while the end (229) of the externally threaded member (227) is in contact with the surface of the radially extending recess (225), between a first, radially outermost position and a second, radially innermost position.

11. The toolholder (121) as set forth in claim 1, **characterized in that** the second end (155) of the rod (151) is externally threaded and is in threaded engagement with and axially movable relative to the second portion (147) of the axial opening (129) of the body (123).

12. The toolholder (121) as set forth in claim 11, **characterized in that** the rod (151) comprises a non-circular axially extending opening (429).

13. A cutting tool comprising the toolholder (121) as set forth in claim 1 and a cutting head (21), the cutting head (21) comprising a cutting portion (23) and a shank portion (25), the shank portion (25) being disposed in the axial opening (129) of the body (123).

## Patentansprüche

1. Werkzeughalter (121) mit einer Spannvorrichtung für einen Schneidkopf, welche aufweist:
einen Körper (123), der ein erstes Ende (125) und ein zweites Ende (127) sowie eine axiale Öffnung bzw. Bohrung (129) hat, die sich von dem ersten Ende (125) zu dem zweiten Ende (127) erstreckt, wobei die axiale Öffnung (129) des Körpers (123) einen ersten Abschnitt (131) aufweist, der einen ersten Durchmesser hat, sowie einen zweiten Abschnitt (147) aufweist, der einen zweiten Durchmesser hat, wobei der erste Abschnitt (121) der axialen Öffnung (129) des Körpers (123) näher an dem ersten Ende (125) liegt als der zweite Abschnitt (147) der axialen Öffnung (129) des Körpers (123) und wobei der erste Durchmesser größer als der zweite Durchmesser ist, und
eine Stange (151), die bewegbar in der axialen Öffnung (129) des Körpers (123) bis zu einer Grundtiefe in der axialen Öffnung bewegbar angeordnet ist, wobei die Stange (151) ein erstes Ende (153) und ein zweites Ende (155) hat, wobei die Stange eine axiale Öffnung bzw. Bohrung (157) hat, die sich von dem ersten Ende (153) der Stange (151) zu dem zweiten Ende (155) der Stange (151) erstreckt, wobei die axiale Öffnung (157) der Stange (151) eine Innenfläche (159) aufweist, wobei zumindest eine sich radial erstreckende Bohrung (145) sich von der Innenfläche (159) der axialen Öffnung (157) der Stange(151) radial nach außen zu einer äußeren Oberfläche der Stange (151) erstreckt, wobei
eine Kugel (141) in der zumindest einen Bohrung (145) angeordnet ist,
die axiale Öffnung (129) des Körpers (123) einen kegelstumpfförmigen Übergangsabschnitt (149) zwischen dem ersten Abschnitt (131) der axialen Öffnung (129) des Körpers (123) und dem zweiten Abschnitt (147) der axialen Öffnung (129) des Körpers (123) hat,
wobei die zumindest eine Bohrung (145) eine erste axiale Länge und die Kugel (141) einen Durchmesser hat, der größer als die erste axiale Länge ist und sich durch die zumindest eine Bohrung (145) in die axiale Öffnung (157) der Stange (151) erstreckt, wenn die Stange (151) sich in der Grundtiefe in der axialen Öffnung (129) befindet, **dadurch gekennzeichnet, dass** die Kugel (141) zumindest mit einem Teil einer Innenfläche (163) des Übergangsabschnittes (149) in Kontakt steht, wenn die Stange (151) sich in der axialen Öffnung (129) in der Grundtiefe befindet.

2. Werkzeughalter (121) nach Anspruch 1, **dadurch gekennzeichnet, dass** die zumindest eine Bohrung (145) und die Kugel (141) so bemessen sind, dass dann, wenn die Kugel (141) mit zumindest einem Teil einer Innenfläche des zweiten Abschnittes (147) der axialen Öffnung (129) des Körpers (123) in Kontakt steht, ein Teil der Kugel (141) sich durch die zumindest eine Bohrung (145) in die axiale Öffnung (157) der Stange (151) hineinerstreckt.

3. Werkzeughalter (121) nach Anspruch 1, **dadurch gekennzeichnet, dass** die Stange (151) eine Mehrzahl von sich radial erstreckenden Bohrungen (145) aufweist und eine entsprechende Mehrzahl von Kugeln (141) in entsprechenden Bohrungen (145) aus einer Mehrzahl von sich radial erstreckenden Bohrungen (145) angeordnet ist.

4. Werkzeughalter (121) nach Anspruch 3, **dadurch gekennzeichnet, dass** die Mehrzahl von sich radial erstreckenden Bohrungen (145) um den Umfang der Stange (151) herum gleichmäßig beabstandet sind.

5. Werkzeughalter (121) nach Anspruch 3, **dadurch gekennzeichnet, dass** die Stange (151) zumindest drei sich radial erstreckende Bohrungen (145) aufweist.

6. Werkzeughalter (121) nach Anspruch 1, **dadurch gekennzeichnet, dass** die Stange (151) eine sich radial erstreckende Keilfläche (323) auf der Stange (151) aufweist, sowie einen Spannkolben (327), der in einer sich radial erstreckenden Bohrung (329) in dem Körper (123) bewegbar angeordnet ist, wobei der Spannkolben (327) eine Keilfläche (331) aufweist, die dafür ausgelegt ist, mit der Keilfläche (323) der Stange (151) in Kontakt zu treten, wobei der Spannkolben (327) dafür ausgelegt ist, dass er angeordnet ist in (a) einer ersten Position, in welcher die Keilfläche (323) der Stange (151) und die Keilfläche (331) des Spannkolbens (327) miteinander so ausgerichtet sind, dass die Stange (151) durch den Spannkolben (327) in der axialen Öffnung (129) des Körpers (123) gehalten wird und zumindest ein Teil der zumindest einen Bohrung (145) dafür ausgelegt ist, dass er dem ersten Abschnitt (131) der axialen Öffnung (129) des Körpers (123) gegenüberliegt, und (b) in einer zweiten Position, in welcher die Keilfläche (323) der Stange (151) die Keilfläche (331) des Spannkolbens (327) so ausgerichtet sind, dass die Stange (151) in der axialen Öffnung (129) des Körpers (123) durch den Spannkolben (327) gehalten wird und zumindest ein Teil der zumindest einen Bohrung (145) in dem Übergangsabschnitt (149) der axialen Öffnung (129) des Körpers (123) gegenüberliegend angeordnet ist.

7. Werkzeughalter (121) nach Anspruch 1, **dadurch gekennzeichnet, dass** die Stange (151) eine sich radial erstreckende Keilfläche (323) auf der Stange (151) aufweist und dass ein Spannkolben (327) bewegbar in einer sich radial erstreckenden Bohrung (329) in dem Körper (123) angeordnet ist, wobei der Spannkolben (327) eine Keilfläche (331) aufweist, die dafür ausgelegt ist, mit der Keilfläche (323) der Stange (151) in Kontakt zu treten, wobei der Spannkolben (327) dafür ausgelegt ist, dass er angeordnet ist in (a) einer ersten Position, in welcher die Keilfläche (323) der Stange (151) und die Keilfläche (331) des Spannkolbens (327) so ausgerichtet sind, dass die Stange (151) durch den Spannkolben (327) in der axialen Öffnung (129) des Körpers (123) gehalten wird und zumindest ein Teil der zumindest einen Bohrung (145) so ausgelegt ist, dass sie dem ersten Abschnitt (131) der axialen Öffnung (129) des Körpers (123) gegenüberliegt, und (b) einer zweiten Position, in welcher die Keilfläche (323) der Stange (151) und die Keilfläche (331) des Spannkolbens (327) so ausgerichtet sind, dass die Stange (151) durch den Spannkolben (327) in der axialen Öffnung (129) des Körpers (123) gehalten wird, und zumindest ein Teil der zumindest einen Bohrung (145) dem zweiten Abschnitt (147) der axialen Öffnung (129) des Körpers (123) gegenüberliegend angeordnet ist.

8. Werkzeughalter (121) nach Anspruch 7, **dadurch gekennzeichnet, dass** der Spannkolben (327) dafür ausgelegt ist, dass er angeordnet ist in (c) einer dritten Position, in welcher die Keilfläche (323) der Stange (151) und die Keilfläche (331) des Spannkolbens (327) nicht ausgerichtet sind und die Stange (151) durch den Spannkolben (327) nicht gehalten wird.

9. Werkzeughalter (121) nach Anspruch 7, **dadurch gekennzeichnet, dass** die Stange (151) eine sich axial erstreckende Aussparung (343) in der Stange (121) aufweist, sowie einen Anschlag (345), der sich in die sich axial erstreckende Aussparung (343) erstreckt, so dass die Stange (151) nur für eine Bewegung zwischen der ersten Position und der zweiten Position ausgelegt ist.

10. Werkzeughalter (121) nach Anspruch 1, **dadurch gekennzeichnet, dass** der Körper (123) ein Innengewinde (223) aufweist, die sich von einer Außenfläche (165) des Körpers (123) zu der axialen Öffnung (129) des Körpers (123) erstreckt und einen Winkel von mehr als 0° und weniger als 90° mit einer zentralen Achse des Körpers (123) einschließt, wobei die Stange (151) eine sich radial erstreckende Aussparung (225) aufweist und der Werkzeughalter (121) ein mit Außengewinde versehenes Teil (227) aufweist, das im Gewindeeingriff mit der Innengewindeöffnung (223) steht, so dass ein Ende (229) des mit Außengewinde versehenen Teiles (227) mit einer Oberfläche der sich radial erstreckenden Aussparung (225) in der Stange (151) in Kontakt steht, wobei das mit Außengewinde versehene Teil (227), während das Ende (229) des mit Außengewinde versehenen Teiles (227) mit der Oberfläche der sich radial erstreckenden Aussparung (225) in Kontakt steht, zwischen einer ersten, radial am weitesten außenliegenden Position und einer zweiten, radial am weitesten innenliegenden Position bewegbar ist.

11. Werkzeughalter (121) nach Anspruch 1, **dadurch gekennzeichnet, dass** das zweite Ende (155) der Stange (151) mit einem Außengewinde versehen ist und in Gewindeeingriff mit dem zweiten Abschnitt (147) der axialen Öffnung (129) des Körpers (123) steht und relativ zu diesem axial bewegbar ist.

12. Werkzeughalter (121) nach Anspruch 11, **dadurch gekennzeichnet, dass** die Stange (151) kreisförmige, sich axial erstreckende Öffnungen (429) aufweist.

13. Schneidwerkzeug, welches den Werkzeughalter (121) nach Anspruch 11 sowie einen Schneidkopf (21) aufweist, wobei der Schneidkopf (21) einen Schneidabschnitt (23) und einen Schaftabschnitt (25) aufweist, wobei der Schaftabschnitt (25) in der axialen Öffnung (129) des Körpers (123) angeordnet ist.

## Revendications

1. Porte-outil (121) comprenant un agencement de serrage de tête de coupe, comprenant :
un corps (123) comprenant une première extrémité (125) et une deuxième extrémité (127), et une ouverture axiale (129) s'étendant à partir de la première extrémité (125) en direction de la deuxième extrémité (127), l'ouverture axiale (129) du corps (123) comprenant une première partie (131) ayant un premier diamètre et une deuxième partie (147) ayant un deuxième diamètre, la première partie (131) de l'ouverture axiale (129) du corps (123) étant plus proche de la première extrémité (125) que la deuxième partie (147) de l'ouverture axiale (129) du corps (123) et le premier diamètre étant plus grand que le deuxième diamètre ; et
une tige (151) disposée de manière mobile dans l'ouverture axiale (129) du corps (123) jusqu'à une profondeur inférieure dans l'ouverture axiale, la tige (151) comprenant une première extrémité (153) et une deuxième extrémité (155),
la tige comprenant une ouverture axiale (157) s'étendant à partir de la première extrémité (153) de la tige (151) en direction de la deuxième extrémité (155) de la tige (151), l'ouverture axiale (157) de la tige (151) comprenant une surface intérieure (159), au moins un trou s'étendant radialement (145) s'étendant radialement vers l'extérieur à partir de la surface intérieure (159) de l'ouverture axiale (157) de la tige (151) jusqu'à une surface extérieure de la tige (151),
une bille (141) est disposée dans le au moins un trou (145),
l'ouverture axiale (129) du corps (123) comprenant une partie de transition tronconique (149) entre la première partie (131) de l'ouverture axiale (129) du corps (123) et la deuxième partie (147) de l'ouverture axiale (129) du corps (123),
dans lequel le au moins un trou (145) a une première longueur axiale et la bille (141) a un diamètre supérieur à la première longueur axiale, et s'étend à travers le au moins un trou (145) dans l'ouverture axiale (157) de la tige (151) lorsque la tige (151) se trouve au niveau de la profondeur inférieure dans l'ouverture axiale (129), **caractérisé en ce que** la bille (141) est en contact avec au moins une partie d'une surface intérieure (163) de la partie de transition (149), lorsque la tige (151) se trouve au niveau de la profondeur inférieure dans l'ouverture axiale (129).

2. Porte-outil (121) selon la revendication 1, **caractérisé en ce que** le au moins un trou (145) et la bille (141) sont dimensionnés de sorte que, lorsque la bille (141) est en contact avec au moins une partie d'une surface intérieure de la deuxième partie (147) de l'ouverture axiale (129) du corps (123), une partie de la bille (141) s'étend à travers le au moins un trou (145) dans l'ouverture axiale (157) de la tige (151).

3. Porte-outil (121) selon la revendication 1, **caractérisé en ce que** la tige (151) comprend une pluralité de trous s'étendant radialement (145) et une pluralité correspondante de billes (141) disposées dans des trous respectifs de la pluralité de trous s'étendant radialement (145).

4. Porte-outil (121) selon la revendication 3, **caractérisé en ce que** la pluralité de trous s'étendant radialement (145) sont écartés de manière égale autour d'une circonférence de la tige (151).

5. Porte-outil (121) selon la revendication 3, **caractérisé en ce que** la tige (151) comprend au moins trois trous s'étendant radialement (145).

6. Porte-outil selon la revendication 1, **caractérisé en ce que** la tige (151) comprend une surface de coin s'étendant radialement (323) sur la tige (151), et un piston de serrage (327) disposé de manière mobile dans un trou s'étendant radialement (329) dans le corps (123), le piston de serrage (327) comprenant une surface de coin (331) destinée à un contact avec la surface de coin (323) de la tige (151), le piston de serrage (327) étant destiné à être disposé dans (a) une première position dans laquelle la surface de coin (323) de la tige (151) et la surface de coin (331) du piston de serrage (327) sont alignées de sorte que la tige (151) soit retenue dans l'ouverture axiale (129) du corps (123) par le piston de serrage (327) et au moins une partie du au moins un trou (145) est destinée à être disposée à l'opposé de la première partie (131) de l'ouverture axiale (129) du corps (123), et (b) une deuxième position dans laquelle la surface de coin (323) de la tige (151) et la surface de coin (331) du piston de serrage (327) sont alignées de sorte que la tige (151) soit retenue dans l'ouverture axiale (129) du corps (123) par le piston de serrage (337) et au moins une partie du au moins un trou (145) est disposée à l'opposé de la partie de transition (149) de l'ouverture axiale (129) du corps (123).

7. Porte-outil (121) selon la revendication 1, **caractérisé en ce que** la tige (151) comprend une surface de coin s'étendant radialement (323) sur la tige (151), et un piston de serrage (327) disposé de manière mobile dans un trou s'étendant radialement (329) dans le corps (123), le piston de serrage (327) comprenant une surface de coin (331) destinée à un contact avec la surface de coin (323) de la tige (151), le piston de serrage (327) étant destiné à être disposé dans (a) une première position dans laquelle la surface de coin (323) de la tige (151) et la surface de coin (331) du piston de serrage (327) sont alignées de sorte que la tige (151) soit retenue dans l'ouverture axiale (129) du corps (123) par le piston de serrage (327) et au moins une partie du au moins un trou (145) est destinée à être disposée à l'opposé de la première partie (131) de l'ouverture axiale (129) du corps (123), et (b) une deuxième position dans laquelle la surface de coin (323) de la tige (151) et la surface de coin (331) du piston de serrage (327) sont alignées de sorte que la tige (151) soit retenue dans l'ouverture axiale (129) du corps (123) par le piston de serrage (337) et au moins une partie du au moins un trou (145) est disposée à l'opposé de la deuxième partie (147) de l'ouverture axiale (129) du corps (123).

8. Porte-outil (121) selon la revendication 7, **caractérisé en ce que** le piston de serrage (327) est destiné à être disposé dans (c) une troisième position dans laquelle la surface de coin (323) de la tige (151) et la surface de coin (331) du piston de serrage (327) ne sont pas alignées et la tige (151) n'est pas retenue par le piston de serrage (327).

9. Porte-outil (121) selon la revendication 7, **caractérisé en ce que** la tige (151) comprend un creux s'étendant axialement (343) dans la tige (151), et une butée (345) s'étendant dans le creux s'étendant axialement (343) de sorte que la tige (151) ne soit destinée qu'à se déplacer entre la première position et la deuxième position.

10. Porte-outil (121) selon la revendication 1, **caractérisé en ce que** le corps (123) comprend une ouverture à filetage interne (223) s'étendant à partir d'une surface extérieure (165) du corps (123) jusqu'à l'ouverture axiale (129) du corps (123) et formant un angle supérieur à 0° et inférieur à 90° par rapport à un axe central du corps (123), la tige (151) comprend un creux s'étendant radialement (225), le porte-outil (121) comprenant un élément à filetage externe (227) en connexion par vissage avec l'ouverture à filetage interne (223) de sorte qu'une extrémité (229) de l'élément à filetage externe (227) soit en contact avec une surface du creux s'étendant radialement (225) dans la tige (151), l'élément à filetage externe (227) étant mobile, alors que l'extrémité (229) de l'élément à filetage externe (227) est en contact avec la surface du creux s'étendant radialement (225), entre une première position, la plus vers l'extérieur radialement et une deuxième position, la plus vers l'intérieur radialement.

11. Porte-outil (121) selon la revendication 1, **caractérisé en ce que** la deuxième extrémité (155) de la tige (151) est à filetage externe et est en engagement par vissage avec la deuxième partie (147) de l'ouverture axiale (129) du corps (123) et mobile axialement par rapport à celle-ci.

12. Porte-outil (121) selon la revendication 11, **caractérisé en ce que** la tige (151) comprend une ouverture s'étendant axialement non circulaire (429).

13. Outils de coupe comprenant le porte-outil (121) selon la revendication 1 et une tête de coupe (21), la tête de coupe (21) comprenant une partie de coupe (23) et une partie de manche (25), la partie de manche (25) étant disposée dans l'ouverture axiale (129) du corps (123).
